# EUROPÄISCHE PATENTSCHRIFT

(11) **EP 0 499 825 B1**
(45) Veröffentlichungstag und Bekanntmachung des Hinweises auf die Patenterteilung: **13.04.1994**
(21) Anmeldenummer: 92101136.7
(22) Anmeldetag: 24.01.1992
(51) Int. Cl.: B60C 25/128

(54) **Demontiervorrichtung für KFZ-Luftreifen**
Dismantling device for vehicle tires
Dispositif de démontage de pneumatique de véhicules automobiles

(30) Priorität: 19.02.1991 DE 9101930 U; 14.10.1991 DE 9112783 U
(43) Veröffentlichungstag der Anmeldung: 26.08.1992
(73) Patentinhaber: STAHLGRUBER Otto Gruber GmbH & Co., 81675 München (DE)
(72) Erfinder:
(74) Vertreter: Beetz & Partner Patentanwälte

(56) Entgegenhaltungen:
- EP-A- 0 015 102
- EP-A- 0 368 385
- WO-A-89/06604
- IT-A- 1 033 997
- US-A- 3 500 892
- US-A- 3 556 192
- US-A- 3 877 505

## Beschreibung

Die Erfindung betrifft eine Montiervorrichtung für KFZ-Luftreifen, bestehend aus einer drehangetriebenen Halterung zum Festklemmen einer Radfelge und aus einer an einem Ständer montierten Abdrückeinrichtung zum Abdrücken der Reifenwulste aus dem Felgenhorn, die zwei mittels Gleitbuchsen an einer Säule geführte und motorisch gegeneinander quer verschiebbare Arme aufweist, welche mit ihren hinteren Enden an den Gleitbuchsen motorisch verschwenkbar angelenkt sind und an deren vorderen freien Enden je ein an einer Reifenwand neben dem Felgenhorn angreifendes Abdrückelement montiert ist.

Aus der EP-A-0 358 729 ist eine derartige Vorrichtung zum Montieren und Demontieren eines KFZ-Luftreifens auf eine bzw. von einer Radfelge bekannt, bei welcher der Auflagesockel für die Radfelge einen pneumatischen Drehantrieb sowie Klemmarme aufweist, die mittels eines pneumatischen Antriebs gegenüber der unter einem geringen Winkel zur Vertikalen ausgerichteten Hochachse gespreizt werden und Druckstücke an ihren freien Enden tragen, die sich bei einer Spreizbewegung von innen an das Felgenbett andrücken. Durch die Winkelversetzung der Klemmarme erfolgt eine selbsttätige Zentrierung der Radfelge auf die geringfügig schräggestellte Hochachse des Auflagesockels. Die beiden mit den Abdrückelementen versehenen Arme der Abdrückeinrichtung sind an einer senkrechten Säule in der jeweiligen Horizontalebene verschwenkbar gelagert und in Achsrichtung der Säule gegeneinander mittels eines Druckluftzylinders verschiebbar angeordnet. Jeder Arm besteht aus einer an einer Säulenführung befestigten Halterung in Form einer Gleitbuchse und aus einem in dieser Halterung mit einem Ende drehbar gelagerten Hebel, der an seinem freien Ende eine Druckrolle trägt. Etwa im mittleren Abschnitt des Hebels greift ein in der Halterung angeordneter Druckzylinder an, der eine quer zur Armlängsachse gerichtete Druckkraft auf den Hebel und damit auch auf die Druckrolle ausübt, so daß die beiden Hebel beider Arme je eine begrenzte Schwenkbewegung um ihr Endlager ausführen. Am oberen Ende des Maschinenständers ist ein Knickarm vertikal schwenkbar gelagert, der an seinem freien Ende ein hakenförmiges Aushebeelement trägt, das unten den Reifenwulst greift, wenn der Knickarm von einem Operator bewegt und der Aushebehaken über das Felgenhorn von Hand gezogen worden ist. Durch Drehen des Auflagesockels wird der Reifenwulst durch diesen Aushebehaken von der Felge gelöst. Nachteilig bei dieser bekannten Montiervorrichtung ist die unzureichende Anpassung an unterschiedliche Reifentypen und Felgen. Darüber hinaus setzt die Bedienung der einzelnen Funktionsgruppen eine erhebliche Erfahrung und Geschicklichkeit des Operators voraus.

Aus der US-PS 4 047 553 ist eine Montiervorrichtung für Luftreifen bekannt, die auf einem formsteifen Bett einen säulenartigen Auflagesockel trägt, auf dessen Gewindespindel ein kegelförmiges Klemmrad zum Festspannen der Radschüssel verdrehbar aufgenommen ist. Ein vertikaler Ständer ist mittels eines Druckzylinders teleskopartig in der Höhe verstellbar und weist zwei horizontale Arme auf, an deren Enden je eine kegelförmige Druckrolle gelagert ist. Die Druckrollen können durch Vertikalbewegungen des teleskopartigen Ständers nacheinander an die eine oder andere Seitenwand herangefahren werden, um den einen oder anderen Reifenwulst vom Felgenhorn wegzudrücken. Auch diese bekannte Montiervorrichtung benötigt fachkundiges Personal und kann nur in begrenztem Umfang auf unterschiedliche Radgrößen und Felgenarten eingestellt werden. Eine ähnliche Montiervorrichtung für Luftreifen ist aus der US-PS 3 086 578 bekannt.

Aus der EP-A-0 015 102 ist eine Montiervorrichtung für KFZ-Luftreifen bekannt, bei der ein mit einem oberen Abdrückelement versehener Teleskoparm querverschiebbar an einer Säule angeordnet ist, die mit ihrem unteren Ende über ein Zwischenstück verschwenkbar am Gehäuse eines Druckluftzylinders angelenkt ist. Zum Abdrücken des unteren Reifenwulstes von der Felge ist ein mit dem Kolben des Druckluftzylinders gelenkig gekoppelter Abdrückhebel über ein gesondertes Gelenkgestänge am Gehäuse gelagert. Bei der Montage eines Luftreifens müssen eine Vielzahl von Vorgängen manuell durchgeführt werden.

In der IT-A-1 033 997 ist eine Reifenmontiervorrichtung beschrieben, die nur einen einzigen an einer schwenkbaren Säule befestigten Teleskoparm aufweist, an dessen freiem Ende ein vertikal verstellbarer Holm mit einem Abziehwerkzeug zum Abziehen eines bereits gelösten Reifenwulstes über ein Felgenhorn befestigt ist. Unter dem Teleskoparm ist ein Linearantrieb in Form eines Druckmittelzylinders an der Schwenksäule starr befestigt, dessen Gehäuse und dessen Kolbenstange über je einen Kupplungshebel mit dem Innenteil des Teleskoparmes kuppelbar ist. Zum Abdrücken eines Reifenwulstes vom Felgenhorn dient eine seitlich am Gehäuse vorgesehene Abdrückschaufel, die mittels eines Handhebels betätigt wird. Das aufgespannte Fahrzeugrad muß aus einer seitlichen Abdrückstellung in eine horizontale Montagestellung manuell oder motorisch bewegt werden.

Ein weiterer wesentlicher Nachteil aller bekannten Montiervorrichtungen besteht darin, daß die als Kegelrollen aus z. B. Kunststoff ausgebildeten Abdrückelemente beim Abdrückvorgang unmittelbar auf die relativ empfindlichen Seitenwände des jeweiligen Reifens einwirken, was zu nicht wahrnehmbaren Beschädigungen des Reifeninnenbaus, insbesondere der Radialkarkassen, führen kann. Derartige Beschädigungen sind unbedingt zu vermeiden, weil sie eine erhebliche Beeinträchtigung der Fahrsicherheit des jeweiligen Kraftfahrzeuges bedeuten und zum plötzlichen Platzen des Reifens bei hohen Geschwindigkeiten führen können.

Aufgabe der Erfindung ist es, eine gattungsgemäße Montiervorrichtung zu schaffen, die auf unterschiedliche Reifen- und Felgen-Typen einfach und schnell eingestellt werden kann, einen weitgehend automatisierten Ablauf der einzelnen Montiervorgänge ermöglicht und Beschädigungen der Reifenwände während des Abdrückvorganges ausschließt.

Diese Aufgabe wird erfindungsgemäß dadurch gelöst, daß die beiden Arme der Abdrückeinrichtung teleskopartig ausgebildet sind, daß die Führungssäule für die beiden Arme unter einem spitzen Winkel zur Vertikalen ausgerichtet ist und daß an dem auf der Säule gleitenden Führungsglied jedes Armes ein Druckzylinder montiert ist, dessen Kolbenstange an einem Kupplungselement angreift, welches bei Aktivieren des Druckzylinders mit dem ausschiebbaren Innenteil des Teleskoparmes automatisch in Eingriff gelangt.

Durch die teleskopartige Ausbildung der beiden Abdrückarme kann der Operator die Armlänge und damit die Position des jeweiligen Abdrückelementes an den Durchmesser des Felgenhorns durch eine manuelle Ausziehbewegung der Teleskoparme genau anpassen, so daß die jeweiligen Abdrückelemente unmittelbar neben dem Felgenhorn, d. h. dicht an den Reifenwulst angrenzend, auf den Reifen drücken. Dadurch wird nicht nur ein optimal wirksamer Andruck auch bei unterschiedlichen Reifen- und Felgengrößen gewährleistet, sondern es werden auch Beschädigungen der Reifenwände, insbesondere der Karkassen, durch die Druckrollen sicher verhindert. Durch die kombinierte Schwenk- und Vorschubbewegung des jeweiligen Abdrückelementes erfolgt dessen Andruck auf den Reifen während des gesamten Abdrückvorganges im Bereich des relativ unempfindlichen Wulstsattels, und zwar ohne daß die druckempfindlichen Seitenwände des Reifens in Mitleidenschaft gezogen werden können.

Begünstigt wird dieser Andruck beispielsweise durch eine in vorgegebenen Grenzen verschwenkbare Anlenkung des jeweiligen Druckrollenhalters am ausziehbaren Teil des Teleskoparms, wobei dieser Druckrollenhalter zweckmäßig nach oben bzw. unten versetzt am Teleskoparm angelenkt und durch eine Feder in seiner Ausgangsstellung gehalten werden kann.

Durch die achsparallele Anordnung eines als Hydraulikzylinder ausgebildeten Linearmotors neben, d. h. oberhalb bzw. unterhalb des jeweiligen Teleskoparmes und durch die automatisch einrückende Kupplung seiner Kolbenstange mit dem ausfahrbaren Innenteil des Teleskoparmes in Verbindung mit dem am hinteren Armende vorgesehenen Lagersystem wird erreicht, daß durch die Betätigung jeweils nur eines Antriebsaggregats, nämlich des Hydraulikzylinders, sich die angestrebte kombinierte Schwenk- und Vorschubbewegung des Abdrückelementes vollzieht.

Gemäß einer zweckmäßigen Ausgestaltung der Erfindung wird zur Erzielung der kombinierten Schwenk- und Vorschubbewegung der beiden Teleskoparme je ein Führungssystem eingesetzt, welches das rückwärtige Ende des Teleskoparmes mit der Gleitbuchse verbindet und eine zwangsgeführte Bewegung dieses Armendes zuläßt. Zweckmäßig enthält das Führungssystem zwei am Armende befestigte Querzapfen und mindestens eine an der Gleitbuchse befestigte vertikale Platte, in welcher ein oberes abgewinkeltes und ein unteres etwa geradliniges Langloch ausgebildet sind, in denen die Querbolzen geführt werden. Eine größere Verwindungssteifigkeit und damit Stabilität des Führungssystems wird erreicht, wenn an jeder Gleitbuchse zwei zueinander parallele Platten seitlich befestigt sind, zwischen denen der im Querschnitt viereckige Teleskoparm in dem von den Langlöchern bestimmten Maße bewegbar aufgenommen und auch der als Hydraulikzylinder ausgebildete Linearantrieb angelenkt sind. Durch diese Ausbildung des Führungssystems ergibt sich bei einer Betätigung des Hydraulikzylinders in einer Abdrückphase eine Bewegung des als Kunststoff-Kegelrolle ausgebildeten Abdrückelements mit überwiegendem Schwenkanteil, da der obere Querzapfen in dem etwa horizontal ausgerichteten Langlochteil abläuft, während der untere Querbolzen im hinteren Abschnitt des ihm zugeordneten Langlochs verbleibt. Erst in einer zweiten Phase des Abdrückvorganges erfolgt eine Bewegung des Abdrückelementes, bei welcher der Vorschubanteil gegenüber dem Schwenkanteil überwiegt, um das Abdrückelement in das Felgenmaul hineinzuschieben. In dieser zweiten Bewegungsphase läuft der obere Querbolzen in dem abgebogenen Teil des oberen Langloches und der untere Querbolzen wird in seinem Langloch horizontal verschoben. Eine in der Regel noch günstigere Vorschub- und Schwenkbahn des Abdrückelements läßt sich erzielen, wenn das obere Langloch insgesamt drei gegeneinander abgewinkelte Abschnitte enthält, von denen der in der ersten Bewegungsphase des Teleskoparmes, d. h. in der Abdrückphase, wirksame Abschnitt schräg nach oben verläuft, um dem Abdrückelement eine mehr senkrecht zur Seitenwand des Reifens gerichtete Bewegung zu erteilen. Die vorstehenden Erläuterungen betreffen den oberen Teleskoparm, gelten jedoch in entsprechender Weise auch für den unteren Querarm.

Gemäß einer weiteren vorteilhaften Ausführung der Erfindung kann hinter der zylindrischen Führungssäule in dem achsparallel zum Auflagesockel ausgerichteten Ständer eine achsparallele vieleckige Führungsstange angeordnet sein, wobei die Gleitbuchsen rückwärtige Ansätze aufweisen, welche die Führungsstange im Gleitsitz umgreifen. Durch diese Doppelführung wird eine hochstabile Gleithalterung der Teleskoparme erzielt, um die beim Abdrücken auftretenden hohen Kräfte und Momente sicher in die Säule einleiten zu können.

Gemäß einer zweckmäßigen Weiterbildung der Erfindung ist am Ständer ein abgewinkelter Handhebel montiert, der um seine Mittelachse verdrehbar und teleskopartig ausziehbar ausgebildet sein kann. Der ausziehbare Teil dieses Handhebels ist mechanisch z. B. über flexible Schuborgane (Bowden-Zug) oder über Druckmittelleitungen mit den beiden ausziehbaren Teilen der Teleskoparme verbunden, so daß eine Längsbewegung dieses Handhebels zu einer synchronen Einzieh- oder Ausschiebebewegung der beiden verschiebbaren inneren Teile der Teleskoparme führt. An diesem Handhebel sind zweckmäßigerweise Handschalter angeordnet, durch deren Betätigung die an den Teleskoparmen montierten Druckzylinder mit Druckmittel, insbesondere mit Druckluft, beaufschlagt werden. Darüber hinaus kann der Stellhebel in einer horizontalen Ebene um eine Hochachse verschwenkbar am Maschinenständer gelagert sein, was die Bedienungsfreundlichkeit fördert.

Gemäß einer weiteren zweckmäßigen Ausgestaltung der Erfindung weist die Aushebeeinrichtung einen dreiteiligen Knickarm auf, an dessen freiem Ende ein Doppelarm mit je einem Aushebewerkzeug um 180° verdrehbar befestigt ist. Die drei Teile des Knickarms sind um horizontale Achsen gelenkig miteinander verbunden, wobei eine Feder den Knickarm selbsttätig in einer zurückgezogenen Ruhelage hält. Aufgrund der Vielgelenkigkeit dieses Knickarmes kann das jeweils ausgewählte Aushebeelement sehr genau am jeweiligen Reifenwulst auch bei unterschiedlichen Felgengrößen positioniert werden. Die Verwendung von zwei wahlweise einsetzbaren Aushebeelementen ermöglicht eine optimale Anpassung an unterschiedliche Felgenarten, z. B. Stahl- bzw. Aluminium-Felgen.

Eine weitere zweckmäßige Ausgestaltung der Erfindung zeichnet sich dadurch aus, daß im Auflagesockel ein federbelasteter Drehteller in der Sockelachse verschiebbar angeordnet ist. Dieser Federteller gewährleistet eine großflächige und damit sichere Auflage der Radschüssel senkrecht zur Sockelachse. Durch die Verschiebbarkeit des Tellers gegen die Kraft einer Schraubenfeder kann die Felge in einer optimalen Höhenlage zu den Klemmarmen positioniert werden, so daß die Druckstücke der Klemmarme stets an einem glatten Innenwandteil des Felgenbetts zur Anlage gelangen und damit eine feste und betriebssichere Halterung der Felge auf dem Auflagesockel sichergestellt ist.

Weitere zweckmäßige Merkmale und Besonderheiten der erfindungsgemäßen Montiervorrichtung lassen sich der Zeichnung und der beiliegenden Beschreibung von bevorzugten Ausführungsbeispielen entnehmen. Es zeigen:
- Fig. 1: die Montiervorrichtung in schematischer Perspektiv-Darstellung;
- Fig. 2: eine mögliche Ausführung eines Teleskoparmes der in Fig. 1 dargestellten Montagevorrichtung;
- Fig. 3: eine vergrößerte Seitenansicht einer anderen kegelförmigen Druckrolle während eines Andrückvorganges;
- Fig. 4: eine andere Montiervorrichtung in schematischer Perspektiv-Darstellung;
- Fig. 5, 6: jeweils einen Teleskoparm in vergrößerter schematischer Seitenansicht.

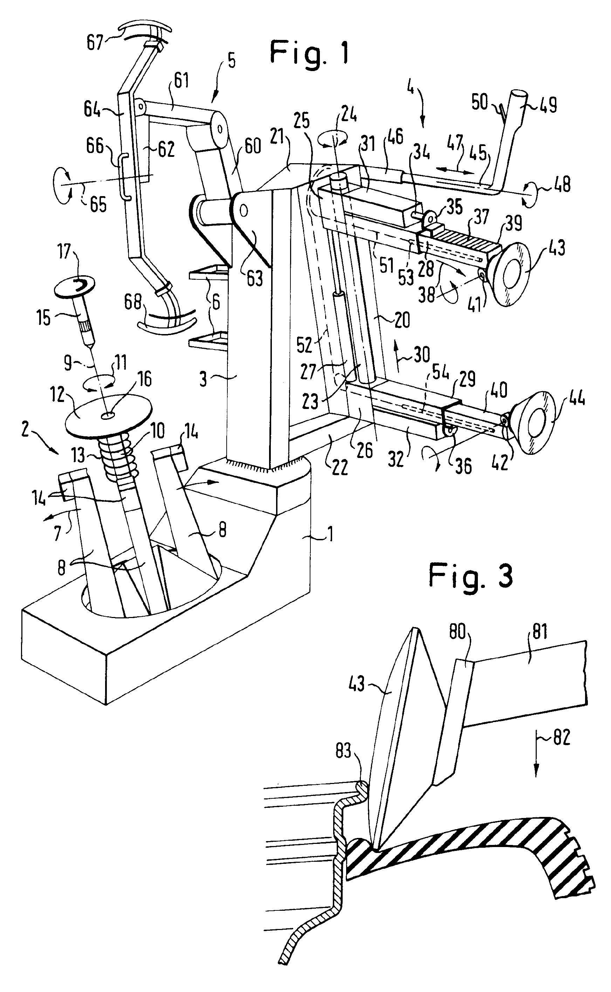

Die in Fig. 1 dargestellte Montiervorrichtung enthält einen formsteifen stabilen Unterbau 1, in dessen Innerem Antriebe und Steuermittel untergebracht sind. Im vorderen abgesenkten Teil des Unterbaus 1 ist ein Auflagesockel 2 und auf dem erhöhten Rückteil ein Ständer 3 angeordnet, der seitlich nach hinten versetzt eine Abdrückeinrichtung 4 sowie am oberen Ende eine Aushebeeinrichtung 5 trägt. An der Ständerseitenwand sind mehrere Ablageschalen 6 für Kleinteile befestigt.

Der Auflagesockel 2 enthält vier in Richtung der Pfeile 7 spreizbare Klemmarme 8, die unter einem Winkel von 90° versetzt um eine zur Vertikalen unter einem spitzen Winkel geneigte Hochachse 9 angeordnet sind. Die Spreizung der Klemmarme 8 erfolgt mittels eines im Unterbau 1 angeordneten Druckluftmotors, der den Auflagesockel 2 während eines Abdrück- bzw. Aushebevorganges um die Hochachse 9 in Drehung versetzt. Eine zentrale Tragsäule 10 ist im Auflagesockel längsverschiebbar und in Richtung des Pfeiles 11 verdrehbar gelagert. Am freien Ende dieser Tragsäule 10 ist ein Teller 12 befestigt, der zusammen mit der Tragsäule 10 von Hand gegen die Kraft einer Feder 13 eingeschoben werden kann. Druckstücke 14 an den oberen Enden der Klemmarme legen sich bei deren Spreizbewegung an die Innenwand des Felgenbetts eines auf dem Teller 12 aufgelegten und von Hand in eine entsprechende Höhenlage eingedrückten Fahrzeugrades an. Zur Fixierung der Radschüssel auf dem Teller 12 kann ein Klemmdorn 15 mit daran befestigtem Gegenteller und einer Gummiklemmhülse verwendet werden, der durch die Achsbohrung der Radnabe hindurch in das Loch 16 des Tellers 12 und der Tragsäule 10 eingeführt und durch Umlegen eines Handbügels 17 festgeklemmt wird.

Die Abdrückeinrichtung 4 enthält einen Tragholm 20, der mit seinen beiden Enden über je eine Querstrebe 21, 22 an der Rückseite des Ständers 3 bzw. am Sockel 1 befestigt und seitlich hinter dem Ständer angeordnet ist. Im Inneren des Holms 20 ist eine Führungssäule 23 vorgesehen, deren Achse 24 parallel zur Hochachse 9 des Auflagesockels 2 ausgerichtet ist. An dieser Führungssäule 23 sind zwei Führungskörper 25, 26 mittels eines Druckluftzylinders 27 verschiebbar geführt, an deren Vorderseite ein oberer und ein unterer Teleskoparm 28, 29 angelenkt sind. Durch eine Beaufschlagung des Druckluftzylinders 27 werden die beiden Teleskoparme 28, 29 in Richtung der Pfeile 30 und damit der Längsachse 24 verschoben. Beide Teleskoparme sind um die Achse 24 vorzugsweise synchron von Hand verdrehbar, so daß sie eine zur Hochachse 9 des Auflagesockels radiale Lage einnehmen können, nachdem ein zu montierendes Fahrzeugrad auf dem Sockel aufgelegt und fixiert worden ist. Oberhalb des oberen und unterhalb des unteren Teleskoparmes 28, 29 ist ein hier als Hydraulik- oder Druckluftzylinder 31, 32 ausgebildeter Linearantrieb am jeweiligen Führungskörper 25, 26 angelenkt und in etwa parallel zum zugehörigen Teleskoparm 28, 29 ausgerichtet. Am vorderen Ende der jeweiligen Kolbenstange 34 ist über ein schwenkbares Zwischenglied 35a ein hakenförmiges Kupplungsglied 35, 36 angelenkt, welches zu Beginn einer Ausfahrbewegung der Kolbenstange in ein Zahnprofil 37 automatisch eingreift, das an der Außenseite des ausschiebbaren Innenteils 39, 40 jedes Teleskoparmes 28, 29 ausgebildet ist. Das Zwischenglied 35a ist am vorderen Ende des Außenteils jedes Teleskoparms 28, 29 um einen Querbolzen begrenzt schwenkbar gelagert. Durch eine Druckmittelbeaufschlagung der beiden Druckluftzylinder 31, 32 wird nach dem Eingriff des hakenförmigen Kupplungsgliedes 35 in die Verzahnung 37 des oberen Teleskoparms 28 bzw. des hakenförmigen Kupplungsgliedes 36 in die an der Unterseite des unteren Teleskoparms 29 vorgesehene - nicht dargestellte - Verzahnung der jeweilige Teleskoparm in Richtung des Pfeiles 38 auf einer bogenförmig nach unten gerichteten Bahn vorgeschoben. Am freien Ende jedes Innenteils 39, 40 ist je ein Halter 41, 42 befestigt, an dem je eine Druckrolle 43, 44 um Querachsen gegen die Kraft einer nicht dargestellten Feder verschwenkbar gelagert ist. Die Größe der gegensinnigen Verschwenkbewegungen der beiden Druckrollen 43, 44 wird durch nicht dargestellte Anschläge begrenzt. Die beiden Druckrollen 43, 44 bestehen aus einem zähfesten Kunststoff und haben eine kreisbogenförmig gewölbte Stirnfläche sowie einen rückwärtigen Kegelmantel.

Zum synchronen Ausschieben der beiden Innenteile 39, 40 der Teleskoparme 28, 29 dient ein abgewinkelter Handhebel 45, der in einer am Holm 20 befestigten Halterung 46 von Hand axial verschoben (Pfeil 47) und um die Längsachse verdreht (Pfeil 48) werden kann. Am Handgriff 49 sind Druckschalter 50 vorgesehen, mit denen die Beaufschlagung der Druckluftzylinder 27 bzw. 31, 32 gesteuert wird. Der Handhebel 45 ist ferner über zwei Schub- und Zug-Seilzüge 51, 52 mit je einer Schubstange 53, 54 verbunden, so daß durch eine Einschiebebewegung des Handhebels 45 in Pfeilrichtung 47 die Innenteile 39, 40 der beiden Teleskoparme 28, 29 um einen entsprechenden Betrag synchron aus dem jeweiligen Armaußenteil herausgeschoben werden - und umgekehrt.

Die Aushebeeinrichtung 5 enthält einen aus drei Einzelarmen 60, 61, 62 gebildeten Knickarm, von denen der erste Arm 60 an einem Bügel 63 am oberen Vorderende des Ständers 3 um eine Querachse schwenkbar gelagert ist. Eine nicht dargestellte Feder hält den Knickarm in seiner oberen zurückgezogenen Ruhelage. Am freien Ende des dritten Arms 62 ist ein Doppelarm 64 um die Achse 65 mittels eines Handgriffs 66 um 180° verdrehbar sowie in der einen oder anderen Endstellung verriegelbar gelagert. An jedem zurückgewinkelten Ende des Doppelarms 64 befindet sich ein Aushebewerkzeug 67, 68, von denen eines zur Montage von Leichtmetallrädern aus einem zähfesten Kunststoff und das andere zur Montage von Stahlrädern aus einem geeigneten Metall, z. B. Stahl, besteht.

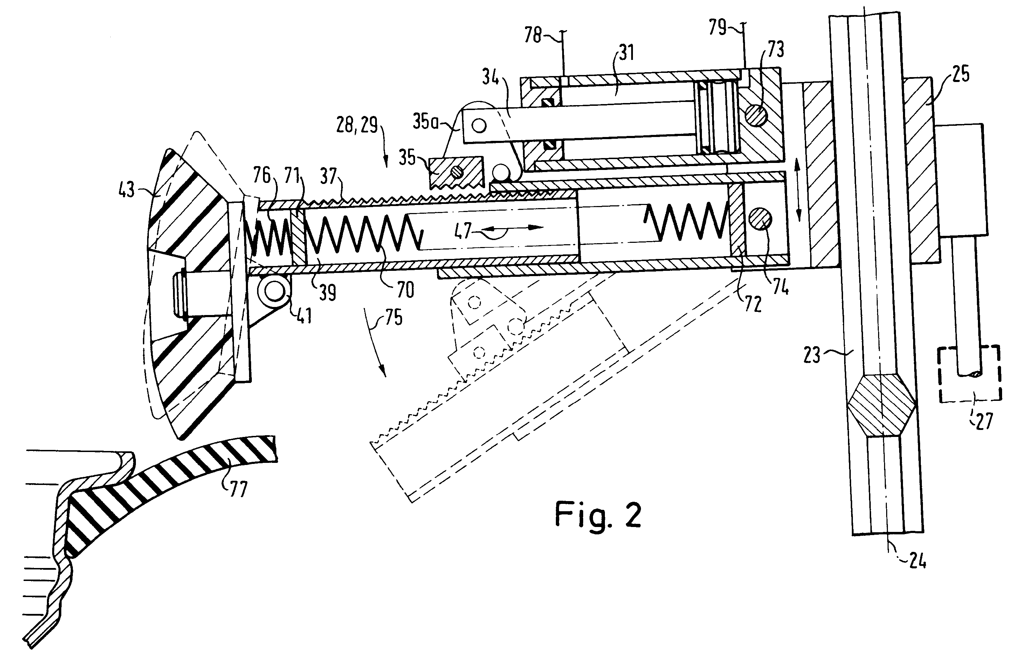

Der in Fig. 2 in vergrößertem Längsschnitt dargestellte Teleskoparm entspricht in seinem Grundaufbau den Teleskoparmen 28, 29 der Montiervorrichtung nach Fig. 1. Die Führungssäule 23 hat jedoch einen sechseckigen Querschnitt, so daß der Führungskörper 25 nicht um die Säulenachse 24 verschwenkt werden kann. Das bei der Ausführung nach Fig. 1 hakenförmige Kupplungsglied 35 ist hier als Zahnglied ausgebildet und an einem dreieckigen Zwischenglied 35a verschwenkbar gelagert, das am freien Ende der Kolbenstange 34 und auch am Ende des äußeren Armteils angelenkt ist. Im inneren Armteil 39 befindet sich ein Linearantrieb in Form einer Druckfeder 70, die mit ihrem vorderen Ende an einer Querwand 71 des Innenteils 39 und mit ihrem rückwärtigen Ende an einer Querwand 72 im Innenraum des äußeren Armteils abgestützt ist. Der Druckluftzylinder 31 und der äußere Armteil sind über je einen Querbolzen 73, 74 in einer Ausnehmung des Führungskörpers 25 gelagert. Durch Ausfahren der Kolbenstange 34 gelangt das Zahnglied 35 wie bei der Ausführung nach Fig. 1 selbsttätig mit der Verzahnung 37 in Eingriff, woraufhin eine Schwenkbewegung des Tragarmes in Richtung des Pfeils 75 einsetzt. An der unteren Wand des Innenarms 39 ist der Halter 41 befestigt, an dem die Druckrolle 43 um einen Querbolzen in die gestrichelt dargestellte Lage verschwenkbar gelagert ist. Zwischen der Rückwand in der Druckrolle 43 und der Querwand 71 im inneren Arm 39 ist eine Druckfeder 76 eingespannt, die einer Verschwenkbewegung der Druckrolle nach dem Aufsetzen auf die Seitenwand 77 des Luftreifens entgegenwirkt. Die Druckmittelversorgung des Druckluftzylinders erfolgt über zwei Anschlußleitungen 78 und 79.

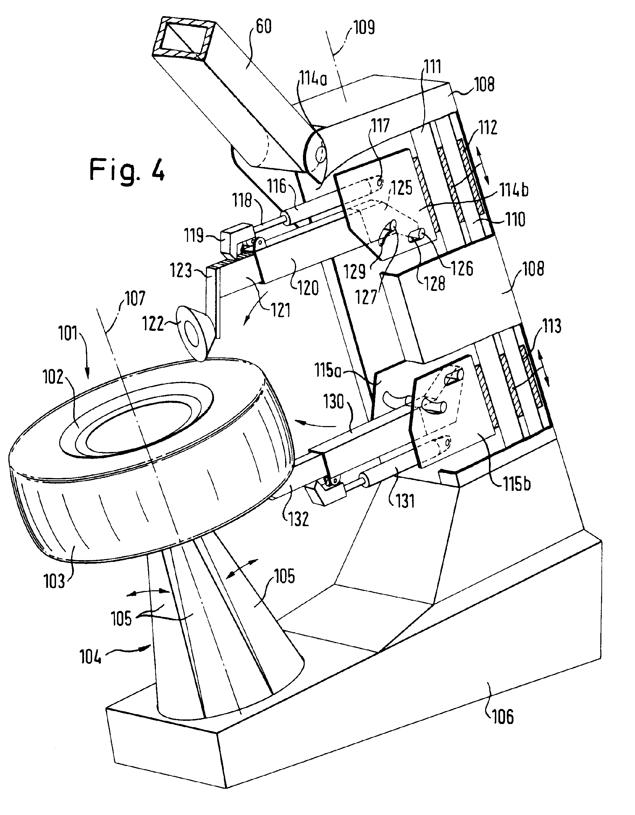

Bei der in Fig. 3 dargestellten Variante ist die Druckrolle 43 mit ihrem kegelförmigen Rückteil starr an einer Klappe 80 befestigt, die weiderum mit dem abgeschrägten Ende eines Tragarms 81 fest verbunden ist. Bei dieser Ausführung wird der Tragarm 81 etwa vertikal in Richtung des Pfeiles 82 bewegt, wobei die vorgewölbte Stirnfläche der schräg ausgerichteten Druckrolle 43 an dem Außenrand des Felgenhorns 83 entlanggleitet und dabei den Reifenwulst aus seinem Sitz im Felgenhorn herausdrückt.

Bei der vorstehend beschriebenen Montiervorrichtung kann statt des in Fig. 1 dargestellten einzigen Druckzylinders 27 zur Höhenverstellung der beiden Teleskoparme 28, 29 auch je ein Druckzylinder für jeden Teleskoparm 28, 29 oder ein anderes Stellglied, wie ein Spindeltrieb, eine Zahnstange o. dgl., vorgesehen sein, um die Höhenverstellung für jeden Teleskoparm 28, 29 gesondert vornehmen zu können. Entsprechendes gilt auch für die Schubstangen 53, 54, die durch andere geeignete Linearantriebe, wie Druckmittelzylinder, Zahnstangen, Spindeltriebe o. dgl., ersetzt werden können. Auch die Art der selbsttätig einrückenden Kupplung der Kolbenstangen 34 mit den verschiebbaren Innenteilen 39, 40 der Teleskoparme 28, 29 ist nicht an die in den Fig. 1 und 2 dargestellten Ausführungen gebunden, sondern kann auch in anderer Weise, z. B. durch Klemmglieder, ausgeführt werden. Im übrigen sind die in den Fig. 1 bis 3 dargestellten Varianten bezüglich ihrer Einzelteile miteinander kombinierbar.

Um nur eine einzige Energieart, nämlich Druckluft, für die verschiedenen Linearantriebe einsetzen und gleichzeitig die bekannten Vorzüge von hydraulischen Servoantrieben ausnutzen zu können, ist es vorteilhaft, die Linearantriebe als kombinierte Druckluft-Hydraulik-Zylinder auszubilden bzw. in der Andrückeinrichtung einen mindestens hydropneumatischen Wandler vorzusehen, der den von außen zugeführten Luftdruck in einen den verschiedenen Stellzylindern über ein internes Leitungssystem zugeführten Flüssigkeitsdruck umsetzt.

Bei der in Fig. 4 dargestellten Montiervorrichtung ist ein Fahrzeugrad 101 mit Felge 102 und dem zu demontierenden Luftreifen 103 auf einer Tragkonstruktion 104 befestigt, die mehrere in Pfeilrichtung spreizbare Tragarme 105 sowie einen im Sockel 106 der Vorrichtung angeordneten Antriebsmotor zum Spreizen und Drehen des Fahrzeugrads 101 um die Hochachse 107 enthält. Die Hochachse ist unter einem spitzen Winkel gegenüber der Vertikalen geneigt, um die Auflage auch schwererer Fahrzeugräder auf den - nicht dargestellten - federbelasteten Teller der Tragkonstruktion 104 zu erleichtern, die in ihrer Konstruktion der in Fig. 1 dargestellten Ausführung entspricht und ebenfalls einen nicht gezeigten Druckluftmotor als Antriebseinheit für die Spreizung der Tragarme 105 und für die Verdrehung des Fahrzeugrads 101 besitzt.

Am rückwärtigen erhöhten Teil des Sockels 106 ist ein Ständer 108 befestigt, dessen Längsachse 109 ebenfalls zur Vertikalen unter einem spitzen Winkel geneigt und zur Hochachse 107 der Tragkonstruktion 104 parallel verläuft. Im rückwärtigen Teil dieses Ständers 108 sind eine Führungsstange 110 von quadratischem oder rechteckigem Querschnitt sowie davor eine zylindrische Führungssäule 111 achsparallel zueinander und zur Ständerachse 109 fest montiert. An diesen beiden Führungselementen 110 und 111 sind zwei Gleit- bzw. Führungsbuchsen 112, 113 längsverschiebbar und gegen Verdrehung gesichert geführt, wobei jede Führungsbuchse 112, 113 mit einem Linearantrieb, z. B. einem hydropneumatischen Stellzylinder, verbunden ist, der nach Beaufschlagung mit dem geeigneten Druckmittel die jeweilige Führungsbuchse einzeln oder gemeinsam in entgegengesetzter Richtung längs der Achse 109 verschiebt. Dieser Vorgang wurde für die Montiervorrichtung nach Fig. 1 im einzelnen beschrieben und gilt hier entsprechend. An der Vorderseite jeder Gleitbuchse 112, 113 sind ein oberes und ein unteres Plattenpaar 114a, 114b und 115a, 115b montiert, wobei jedes Plattenpaar einen Zwischenraum zwischen sich einschließt. In diesem Zwischenraum ist zwischen den oberen Platten 114a, 114b ein Hydraulikzylinder 116 über einen Lagerzapfen 117 angelenkt, dessen Kolbenstange 118 an einer Zahnklinke 119 angreift. Weiterhin ist zwischen den beiden oberen Armen ein Teleskoparm 120 gelagert, dessen ausschiebbarer Armteil 121 eine kegelförmige Druckrolle 122 über eine schräge Platte 123 trägt. Am hinteren Ende des Teleskoparmes 120 ist ein schräg abgewinkelter Stützteil 125 montiert, an dem zwei Querzapfen 126, 127 z. B. durch Schweißen befestigt sind. Jeder dieser Querzapfen trägt an seinen beiden Enden je eine Laufrolle, die in Langlöchern 128, 129 in jeder der beiden Platten 114a, 114b laufen.

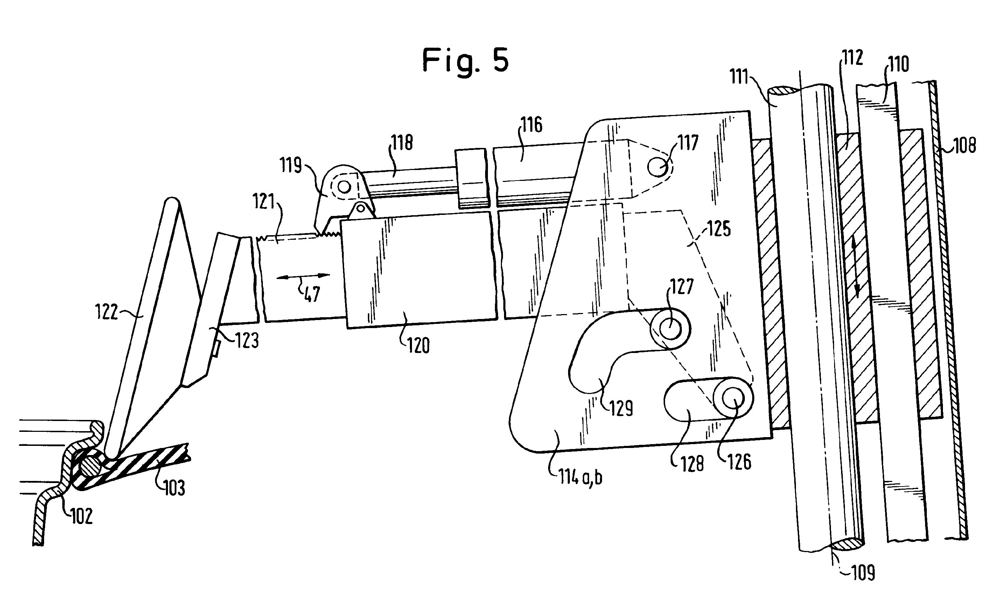

Wie aus Fig. 5 ersichtlich, hat das obere Langloch 129 einen etwa quer zur Achse 109 verlaufenden Abschnitt, der in einen nach unten weisenden Bogenabschnitt übergeht. Das untere Langloch 128 ist etwa geradlinig und quer zur Ständerachse 109 ausgebildet.

Wie insbesondere aus Fig. 4 ersichtlich, ist auch zwischen den beiden unteren Platten 115a, 115b ein Teleskoparm 130 über zwei Querbolzen in Langlöchern gelagert und ein diesem zugeordneter Hydraulikzylinder 131 greift mit seiner Kolbenstange an einer Zahnklinke an, die - ebenso wie die Zahnklinke 119 - außen am Aufnahmeteil des Teleskoparmes schwenkbar gelagert ist. Die Einzelteile dieses Teleskoparmes 131 und seine Lagerung entsprechen denen des oberen Teleskoparmes 120.

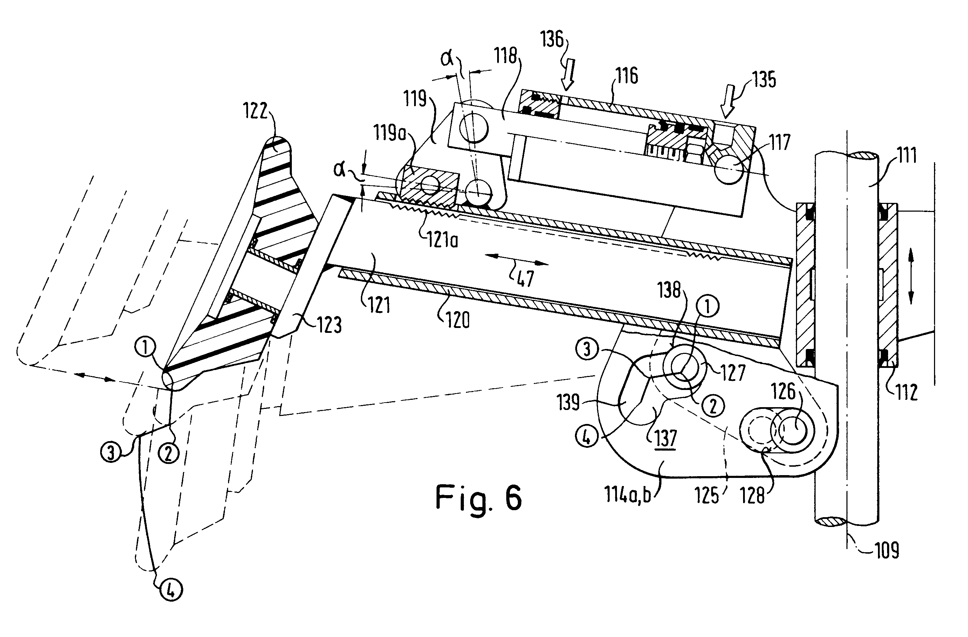

Die Ausführung nach Fig. 6 entspricht weitgehend dem in Fig. 5 dargestellten Teleskoparm 120, so daß gleiche Bauteile auch mit denselben Bezugszeichen gekennzeichnet sind. Bei dem gezeigten Ausführungsbeispiel ist der Stellzylinder 116 für den Teleskoparm 120 ein hydro-pneumatisches Aggregat, dem für den Krafthub Druckflüssigkeit über einen Anschluß 135 und für den Rückhub Druckluft über einen Anschluß 136 zugeführt werden. Dadurch wird ein ausreichend starker Krafthub zum wirksamen Abdrücken auch festsitzender Reifenwulste aus ihrem Felgensitz sowie eine beschleunigte Rückziehbewegung der Andrückrolle 122 erreicht. Eine weitere Variante liegt in der Form des oberen Langlochs 137, das insgesamt aus drei gegeneinander abgewinkelten Abschnitten besteht, von denen der erste Abschnitt 138 etwa parallel zum dritten Abschnitt 139 in Fig. 6 schräg nach oben verläuft. Durch diese Form des Langlochs 137 werden die Laufrollen 127 auf einer dreiteiligen Bahn geführt, die in Fig. 6 durch einen dickeren Linienzug und Zahlen ① bis ④ dargestellt ist. Diese spezielle Bewegungsbahn führt zu einer entsprechend dreiphasigen Bewegung der Andrückrolle, deren Verlauf ebenfalls durch einen verstärkten Linienzug und Zahlen ① bis ④ angegeben ist. Der wirksame untere Rand der Andrückrolle ist in den jeweiligen Endpunkten der einzelnen Bewegungsphasen ① bis ④ gestrichelt angedeutet. Ferner sind in dieser Fig. 6 die Kippbewegungen im Winkelbereich α des Kupplungsglieds 119 während und nach dem Eingriff seiner Zahnklinke 119a in die Verzahnung 121a des inneren Teleskoparmteils 121. Die Zahnklinke 119a durchgreift dabei einen Ausschnitt in der oberen Wand des äußeren Armteils 120.

Mit der vorstehend beschriebenen Montiervorrichtung wird wie folgt gearbeitet.

Nach dem Auflegen eines Fahrzeugrades 101 auf den Tragsockel 104 und Festspannen der Radfelge durch Spreizen der Tragarme 105 werden die beiden Teleskoparme 120, 130 beispielsweise durch - nicht dargestellte - Seilzüge oder andere geeignete Mittel vom Operator so weit synchron ausgefahren, bis sich die oberen und auch die untere Druckrolle 122 unmittelbar oberhalb bzw. unterhalb des jeweiligen Felgenhorns befinden. Durch Betätigen eines Schalters öffnet ein Druckluftventil, welches die beiden Teleskoparme einzeln oder auch gleichzeitig gegeneinander verfährt, wobei beide Arme an der Führungssäule 111 und der Mehrkantstange 110 geführt sind. Diese gegensinnige Querbewegung der beiden Teleskoparme 120, 130 wird automatisch beendet, sobald sich die Druckrollen 122 direkt neben dem Felgenhorn 102 auf dem Reifen 103 abstützen. Daraufhin werden die beiden Hydraulikzylinder entweder einzeln oder gemeinsam mit Druckmittel versorgt, was zu einem Einkuppeln der Kupplungsglieder 118 in der oberen bzw. unteren Verzahnung der ausschiebbaren Armteile 121, 132 führt. Eine weitere Ausschiebebewegung der Kolben 118 bewirkt das Herausdrücken der beiden Reifenwulste aus ihrem Sitz, wobei jeder Teleskoparm 120 in dieser Phase eine Schwenkbewegung um den Querbolzen 126 bzw. dessen Laufrollen als Drehachse ausführt. Sobald der jeweilige Reifenwulst vom Sitz am Felgenhorn 2 etwas freigekommen ist, wird durch eine weitere Ausfahrbewegung der Kolbenstange 118 der gesamte Teleskoparm 120 mit seinem Querzapfen und den daran gelagerten Laufrollen in den beiden Langlöchern 128, 129 verschoben, wobei durch die aufeinander abgestimmte Form dieser beiden Langlöcher eine zusammengesetzte Schwenk- und Vorschubbewegung der Abdrückrolle 122 erzielt wird, deren Bahn etwa der Kontur der Felge entspricht. Durch diese kombinatorische Schwenk- und Vorschubbewegung wird erreicht, daß während des gesamten Abdrückvorganges auch bei relativ tiefem Eindringen der jeweiligen Abdrückrolle 122 in das Felgenbett der in Fig. 5 dargestellte Angriffspunkt der Rolle 122 unmittelbar neben dem Reifenwulst beibehalten wird und eine Druckbeanspruchung der empfindlichen Seitenwände des Reifens unterbleibt.

Die Erfindung ist nicht auf die dargestellten Ausführungsbeispiele beschränkt, sondern kann u. U. auch bei anderen Ausführungen eingesetzt werden, bei denen mit Druckrollen versehene Abdrückarme an einem aufrechten Ständer montiert sind. Insbesondere läßt sich die Erfindung auch bei einer Montiervorrichtung anwenden, bei welcher jeder Teleskoparm und der zugehörige Hydraulikzylinder an einem Führungskörper einzeln angelenkt sind, welcher an einer Führungssäule verdrehbar geführt ist, die in einem seitlich hinter dem Maschinenständer befestigten Hohlträger derart angeordnet ist, daß ihre Längsachse etwa parallel zur Hochachse des Auflagesockels verläuft. Durch diese Anordnung der Führungssäule wird eine in der Armquerebene verschwenkbare Lagerung der beiden Teleskoparme um die Führungssäule erzielt. Dadurch ergibt sich der zusätzliche Vorteil, daß bei der Montage von größeren Reifen die beiden Teleskoparme aus dem Arbeitsbereich seitlich herausgeschwenkt werden können, so daß ein ausreichend großer Freiraum für eine unbehinderte Auflage und Fixierung des Fahrzeugrades zur Verfügung steht. Darüber hinaus können auch Einzelteile oder Baugruppen der beschriebenen Ausführungen miteinander kombiniert bzw. gegeneinander ausgetauscht werden. So können beispielsweise die Ausziehbewegungen der beiden Teleskoparme nach den Fig. 5, 6 mit Hilfe des in Fig. 1 dargestellten Handzughebels 45, 49 und der Seilzüge 51, 52 oder auch durch andere manuelle oder motorische Verstellvorrichtungen durchgeführt werden.

## Patentansprüche

1. Montiervorrichtung für KFZ-Luftreifen, bestehend aus
- einer drehangetriebenen Halterung (2; 104) zum Festklemmen einer Radfelge (102) und
- einer an einem Ständer (3; 108) montierten Abdrückeinrichtung (4) zum Abdrücken der Reifenwulste von dem Felgenhorn, die zwei mittels Führungskörpern bzw. Gleitbuchsen (25, 26; 112, 113) an einer Säule (23; 108) geführte und motorisch gegeneinander querverschiebbare Arme (28, 29; 120, 130) aufweist, die mit ihren hinteren Enden an den Gleitbuchsen motorisch verschwenkbar angelenkt sind und an deren vorderen freien Enden je ein an einer Reifenwand neben dem Felgenhorn angreifendes Abdrückelement (43, 44; 122) montiert ist,
**dadurch gekennzeichnet**,
- daß die beiden Arme (28, 29; 120, 130) teleskopartig ausgebildet und in ihrer Länge einstellbar sind und
- daß etwa parallel oberhalb des oberen Teleskoparms (28; 120) und unterhalb des unteren Teleskoparms (28, 130) je ein Linearantrieb (31, 32; 116, 131) an der jeweiligen Gleitbuchse (25, 26; 120, 130) angelenkt ist, dessen Verstellglied (34; 118) ein Kupplungsglied (35, 36; 119) trägt, das bei Aktivierung des Linearantriebs (31, 32; 116, 131) mit dem ausschiebbaren Innenteil (39, 40; 121, 132) des zugehörigen Teleskoparms (28, 29; 120, 130) selbsttätig in Eingriff gelangt und dem Abdrückelement (34, 44; 122) eine kombinierte Schwenk- und Vorschubbewegung erteilt.

2. Montiervorrichtung nach Anspruch 1,
dadurch gekennzeichnet,
daß jeder Teleskoparm an der ihm zugeordneten Gleitbuchse (112, 113) über ein Führungssystem (125 bis 129) angelenkt ist, das eine zwangsgeführte Schwenk- und Vorschubbewegung des Teleskoparmes herbeiführt, um das Abdrückelement (122) nach dem anfänglichen Lösen des Reifenwulstes vom Felgenhorn in das Felgenbett hineinzudrücken.

3. Montiervorrichtung nach Anspruch 2,
dadurch gekennzeichnet,
daß jedes Führungssystem jeweils zwei an jeder Gleitbuchse (12, 13; 112, 113) befestigte zueinander parallele Platten (114a, 114b; 115a, 115b) enthält, zwischen denen der im Querschnitt viereckige Teleskoparm (120) aufgenommen ist, und daß am rückwärtigen Ende dieses Teleskoparmes ein Tragelement (125) befestigt ist, an welchem zwei Querzapfen (126, 127) mit beidendigen Laufrollen befestigt sind, wobei diese Laufrollen in zwei Langlöchern (128, 129) geführt sind, welche in jeder Platte (114, 115) ausgebildet sind.

4. Montiervorrichtung nach Anspruch 3,
dadurch gekennzeichnet,
daß ein Langloch (128) in jeder Platte (114) geradlinig verläuft und das andere Langloch (129, 137) aus mehreren gegeneinander abgewinkelten Abschnitten besteht.

5. Montiervorrichtung nach Anspruch 1 bis 4,
dadurch gekennzeichnet,
daß jeder als Hydraulikzylinder (31, 32; 116, 131) ausgebildete Linearantrieb mit seinem Verstellglied (34; 118) über ein am vorderen Ende des Innenteils (39, 40; 120) des Teleskoparms gelenkig befestigten Kupplungselement (35, 36; 119, 119a) mit dem ausschiebbaren inneren Armteil (121) kuppelbar ist.

6. Montiervorrichtung nach Anspruch 1 bis 5,
dadurch gekennzeichnet,
daß neben der zylindrischen Führungssäule (111) im Ständer (108) eine achsparallele vieleckige Führungsstange (10) angeordnet ist und daß an den Gleitbuchsen (12, 13) rückwärtige Führungsansätze ausgebildet sind, die mit der Führungsstange (10) zusammenwirken.

7. Vorrichtung nach Anspruch 1 bis 6,
dadurch gekennzeichnet,
daß jeder als Druckmittelzylinder ausgebildete Linearantrieb (31, 32) an einem eine Gleitbuchse enthaltenden Führungskörper (25, 26; 114, 115) einzeln angelenkt ist und daß das jeweilige Kupplungsglied (35, 36; 119a) an je einem Zwischenglied (35a; 119) gelagert ist, das am vorderen Ende der Kolbenstange (34; 118) und am Außenteil des Teleskoparmes (28, 29; 120) angelenkt ist.

8. Vorrichtung nach Anspruch 1 bis 7,
dadurch gekennzeichnet,
daß die beiden Teleskoparme (28, 29; 120, 130) synchron mittels eines vom Operator bewegbaren Stellhebels (45) in ihrer Länge verstellbar sind.

9. Vorrichtung nach Anspruch 7,
dadurch gekennzeichnet,
daß der Stellhebel (45) über Zug-Schub-Seilzüge (51, 52) und Schubstangen (53, 54) mit den verschiebbaren Innenteilen (39, 40) der Teleskoparme (28, 29) gekoppelt ist.

10. Vorrichtung nach Anspruch 1 bis 7,
dadurch gekennzeichnet,
daß im Inneren jedes Teleskoparmes (28, 29) ein Linearantrieb (70) für die Ausschiebebewegung des Innenteils (39, 40) angeordnet ist.

11. Vorrichtung nach Anspruch 8 bis 10,
dadurch gekennzeichnet,
daß am Stellhebel (45) Druckschalter (50) angeordnet sind, die mit Steuerorganen in den zu den Druckmittelzylindern (27, 31, 32) führenden Leitungen gekoppelt sind.

12. Vorrichtung nach einem der Ansprüche 8 bis 11,
dadurch gekennzeichnet,
daß der Stellhebel (45) um eine Hochachse verschwenkbar, um seine Längsachse (48) verdrehbar und über einen Handgriff (49) in seiner Länge verstellbar ausgebildet ist.

13. Vorrichtung nach einem der vorhergehenden Ansprüche,
dadurch gekennzeichnet,
daß die beiden Führungskörper (25, 26) der Teleskoparme (28, 29) an einer zylindrischen Säule (23) um deren Längsachse (24) verschwenkbar geführt und mittels je eines Linearantriebs (27) einzeln höhenverstellbar sind.

14. Vorrichtung nach einem der vorhergehenden Ansprüche,
dadurch gekennzeichnet,
daß die Führungssäule (23; 109) in einem seitlich hinter dem Maschinenständer (3; 108) befestigten Hohlträger derart angeordnet ist, daß ihre Längsachse (24; 109) etwa parallel zur schrägen Längsachse (9; 107) des Auflagesockels (2; 104) verläuft.

15. Vorrichtung nach einem der Ansprüche 1 bis 14,
dadurch gekennzeichnet,
daß die Abdrückrolle (43, 44) in Form einer kegelförmigen Scheibe mit vorgewölbter Stirnfläche ausgebildet und gegen Federkraft um eine Querachse begrenzt verschwenkbar an einem Halter (41) am freien Ende jedes ausschiebbaren Innenteils (39, 40) gelagert ist.

16. Vorrichtung nach Anspruch 1 bis 14,
dadurch gekennzeichnet,
daß die Abdrückrollen mit vorgewölbter Stirnwand und kegelförmiger Rückseite an einer schrägen Platte (80; 123) befestigt sind, die am Ende des jeweiligen Tragarms (81) befestigt ist.

17. Vorrichtung nach Anspruch 1 bis 16,
dadurch gekennzeichnet,
daß die Aushebeeinrichtung einen mehrgelenkigen dreiteiligen Knickarm (60, 61, 62) aufweist, an dessen Endteil (62) ein Doppelarm (64) mit je einem endseitig angeordneten Aushebeelement (67, 68) um 180° verdrehbar und in seinen Endstellungen verriegelbar gelagert ist.

18. Vorrichtung nach einem der Ansprüche 1 bis 17,
dadurch gekennzeichnet,
daß in dem Auflagesockel (2) ein federbelasteter Drehteller (12) in der Sockelachse (9) verschiebbar angeordnet ist.

19. Vorrichtung nach Anspruch 18,
dadurch gekennzeichnet,
daß ein Sicherungszapfen (15) in das Innere der hohlzylindrischen Sockelachse einführbar ist.

20. Vorrichtung nach einem der Ansprüche 1 bis 13,
dadurch gekennzeichnet,
daß die Linearantriebe als kombinierte Druckluft-Hydraulik-Zylinder ausgeführt sind.

## Claims

1. A device for fitting pneumatic tyres on motor vehicles and comprising
- a rotary-driven holder (2; 104) for clamping a wheel rim (102) and
- a pressure device (4) mounted on a stand (3; 108) for pressing the tyre bead away from the wheel flange and comprising two arms (28, 29; 120, 130) guided by guide members or sliding sleeves (25, 26; 112, 113) on a column (23; 108) and transversely movable relative to one another by a motor, the rear ends of the arms being pivoted to the sliding sleeves so as to be pivotable by a motor, and a pressure element (43, 44; 122) engaging a tyre wall near the wheel flange being mounted to the front free end of each arm,
characterised in that
- the two arms (28, 29; 120, 130) are telescopic and adjustable in length, and
- a linear drive (31, 32; 116, 131) is pivoted to the respective sliding sleeve (25, 26; 120, 130) approximately parallel to and above the top telescopic arm (28; 120) and below the bottom telescopic arm (28, 130), and the member (34; 118) for adjusting the sleeve bears a coupling element (35, 36; 119) which, when the linear drive (31, 32; 116, 131) is actuated, automatically engages the extendable inner part (39, 40; 121, 132) of the associated telescopic arm (28, 29; 120, 130) and imparts a combined pivoting and thrust motion to the pressure element (34, 44; 122).

2. A device according to claim 1, characterised in that each telescopic arm is pivoted to the associated sliding sleeve (112, 113) via a guide system (125 to 129) for automatically pivoting the telescopic arm and moving it forward, in order to press the pressure element (122) into the base of the rim after the tyre bead has been initially released from the wheel flange.

3. A device according to claim 2, characterised in that each guide system contains two parallel plates (114a, 114b; 115a, 115b) secured to each sliding sleeve (12, 13; 112, 113) and receiving the square-section telescopic arm (120) between them, and a bearing element (125) is secured to the rear end of the telescopic arm and secured to two transverse pins (126, 127) with runners at each end, the runners being guided in two slots (128, 129) formed in each plate (114, 115).

4. A device according to claim 3, characterised in that one slot (128) in each plate (114) extends in a straight line and the other slot (129, 137) is made up of a number of portions at an angle to one another.

5. A device according to claims 1 to 4, characterised in that each linear drive, which is in the form of a hydraulic cylinder (31, 32; 116, 131) has an adjusting element (34; 118) for coupling to the extendible inner arm part (121) via a coupling element (34, 36; 119, 119a) pivotably secured to the front end of the inner part (39, 40; 121) of the telescopic arm.

6. A device according to claims 1 to 5, characterised in that a concentric polygonal guide rod (10) is disposed near the cylindrical guide column (111) in the stand (108) and rear guide projections are formed on the sliding sleeves (12, 13) and co-operate with the guide rod (10).

7. A device according to claims 1 to 6, characterised in that each linear drive (31, 32), which is in the form of a pressure-medium cylinder, is individually pivoted to a guide member (25, 26; 114, 115) containing a sliding sleeve, and the respective coupling element (35, 36; 119a) is mounted on a respective intermediate member (35a; 119) pivoted to the front end of the piston rod (34; 118) and to the outer part of the telescopic arm (28, 29; 120).

8. A device according to claims 1 to 7, characterised in that the two telescopic arms (28, 29; 120, 130) are synchronously adjustable in length by a lever (45) moved by the operator.

9. A device according to claim 7, characterised in that the lever (45) is coupled by push-pull cables (51, 52) and thrust rods (53, 54) to the movable inner parts (39, 40) of the telescopic arms (28, 29).

10. A device according to claims 1 to 7, characterised in that a linear drive (70) for extending the inner part (39, 40) is disposed inside each telescopic arm (28, 29).

11. A device according to claims 8 to 10, characterised in that pressure switches (50) are disposed on the lever (45) and are coupled to control means in the lines leading to the pressure-medium cylinders (27, 31, 32).

12. A device according to any of claims 8 to 11, characterised in that the lever (45) is pivotable around a vertical axis, rotatable around its longitudinal axis (48) and adjustable in length via a handle (49).

13. A device according to any of the preceding claims, characterised in that the two guide members (25, 26) of the telescopic arms (28, 29) are guided on a cylindrical column (23) so as to be pivotable around its longitudinal axis (24) and are each vertically adjustable by a respective linear drive (27).

14. A device according to any of the preceding claims, characterised in that the guide column (23, 109) is disposed in a hollow holder secured laterally behind the machine stand (3; 108) so that the longitudinal axis (24; 109) of the column extends approximately parallel to the sloping longitudinal axis (9; 107) of the pedestal (2; 104).

15. A device according to any of claims 1 to 14, characterised in that the pressure roller (43, 44) is in the form of a conical disc having a pre-curved end face and is mounted on a holder (41) at the free end of each extendable inner part (39, 40) so as to be pivotable to a limited extent around its transverse axis against spring force.

16. A device according to claims 1 to 14, characterised in that the pressure rollers have a pre-curved end face and conical rear secured to a sloping plate (80; 123) secured to the end of the respective bearing arm (81).

17. A device according to claims 1 to 16, characterised in that the lifting device comprises a multiple-link three-part articulated arm (60, 61, 62) having an end part (62) in which a double arm (64) with a lifting element (67, 68) disposed at each end is mounted so as to be rotatable through 180° and lockable in its end positions.

18. A device according to any of claims 1 to 17, characterised in that spring-loaded turntable (12) is disposed in the pedestal (2) so as to be movable along the axis (9) thereof.

19. A device according to claim 18, characterised in that a securing pin (15) is insertable into the hollow cylindrical pedestal axis.

20. A device according to any of claims 1 to 13, characterised in that the linear drives are combined compressed-air and hydraulic cylinders.

## Revendications

1. Dispositif de montage pour pneumatiques de véhicules automobiles composé
- d'un support (2 ; 104) entraîné en rotation, servant pour tenir serrée une jante de roue (102) ; et
- un dispositif presseur (4), monté sur un pied (3 ; 108) servant à dégager les talons de pneumatiques du rebord de la jante, qui présente deux bras (28, 29 ; 120, 130), qui sont guidés sur une colonne (23 ; 108) au moyen de corps de guidage ou de manchons coulissants (25, 26 ; 112, 113), qui peuvent se déplacer transversalement l'un par rapport à l'autre sous l'action d'un moteur qui sont articulés sur les manchons coulissants par leurs extrémités arrière , de façon à pouvoir pivoter sous l'action d'un moteur, et à l'extrémité avant libre de chacun desquels est monté un élément presseur (43, 44 ; 122) qui attaque un flanc du pneumatique à proximité du rebord de jante ;
caractérisé en ce que
- les deux bras (28, 29 ; 120, 130) sont de construction télescopique et réglables en longueur et en ce que
- à peu près parallèlement au-dessus du bras télescopique supérieur (28 ; 120) et au-dessous du bras télescopique inférieur (29 ; 130), est prévu un entraînement linéaire (31, 32 ; 116, 131) articulé au manchon coulissant correspondant (25, 26 ; 120, 130) et dont l'élément mobile (34 ; 118) porte un organe d'accouplement (35, 36 ; 119) qui, lors de l'activation de l'entraînement linéaire (31, 32 ; 116, 131) entre automatiquement en prise avec la partie intérieure extensible (39, 40 ; 121, 132) du bras télescopique correspondant (28, 29 ; 120, 130) et imprime à l'élément presseur (43, 44 ; 122) un mouvement combiné de pivotement et d'avance.

2. Dispositif de montage selon la revendication 1,
caractérisé
en ce que chaque bras télescopique est articulé au manchon coulissant (112, 113) qui lui correspond par l'intermédiaire d'un système de guidage (125 à 129) qui détermine un mouvement de pivotement et d'avance guidé positivement de ce bras télescopique, pour pousser l'élément presseur (122) dans la base de la jante, après que le talon du pneumatique a été initialement décollé du rebord de jante.

3. Dispositif de montage selon la revendication 2,
caractérisé
en ce que chaque système de guidage comprend deux plaques parallèles entre elles (114a, 114b, 115a, 115b), fixées au manchon coulissant (12, 13 ; 112, 113), entre lesquelles est logé le bras télescopique (120) de forme carrée en section transversale, et en ce qu'a l'extrémité arrière de ce bras télescopique est fixé un élément porteur (125) auquel sont fixés deux tourillons transversaux (126, 127) munis de galets de roulement prévus à leurs deux extrémités, ces galets de roulement étant guidés dans deux trous allongés (128, 129) qui sont formés dans chaque plaque (114, 115).

4. Dispositif de montage selon la revendication 3,
caractérisé
en ce qu'un trou allongé (128) de chaque plaque (114) s'étend en ligne droite et l'autre trou allongé (129, 137) est composé de plusieurs segments coudés l'un par rapport à l'autre.

5. Dispositif de montage selon les revendications 1 à 4,
caractérisé
en ce que chaque entraînement linéaire constitué par un cylindre hydraulique (31, 32 ; 116, 131), peut être accouplé à la partie intérieure extensible (121) du bras par son élément mobile (34 ; 118) et par l'intermédiaire d'un élément d'accouplement (35, 36 ; 119, 119a) qui est articulé à l'extrémité avant de la partie intérieure (39, 40 ; 120) du bras télescopique.

6. Dispositif de montage selon les revendications 1 à 5,
caractérisé
en ce qu'il est prévu dans le pied (108), a coté de la colonne de guidage cylindrique (111), une barre de guidage polygonale (10), parallèle à l'axe, et en ce que, sur les manchons coulissants (12, 13), sont formées des pattes de guidage arrière qui coopèrent avec la barre de guidage (10).

7. Dispositif selon les revendications 1 à 6,
caractérisé
en ce que chaque entraînement linéaire (31, 32), constitué par un cylindre à fluide sous pression, est articulé individuellement sur un corps de guidage (25, 26 ; 114, 115) comprenant un manchon coulissant et en ce que l'organe d'accouplement (35, 36 ; 119a) correspondant est articulé sur un organe intermédiaire (35a ; 119) qui est articulé a l'extrémité avant de la tige de piston (34 ; 118) et à la partie extérieure du bras télescopique (28, 29 ; 120).

8. Dispositif selon les revendications 1 à 7,
caractérisé
en ce que les deux bras télescopiques (28, 29 ; 120. 130) peuvent être réglés en longueur en synchronisme au moyen d'un levier de commande (45) qui peut être manoeuvré par l'opérateur.

9. Dispositif selon la revendication 7,
caractérisé
en ce que le levier de commande (45) est accouplé aux parties intérieures coulissantes (39, 40) des bras télescopiques (28, 29) par des câbles (51, 52) travaillant en traction et poussée et des poussoirs (53, 54).

10. Dispositif selon les revendications 1 à 7,
caractérisé
en ce qu'à l'intérieur de chaque bras télescopique (28, 29), est agencé un entraînement linéaire (70) pour le mouvement d'extension de la partie intérieure (39, 40).

11. Dispositif selon les revendications 8 à 10,
caractérisé
en ce que, sur le levier de commande (45) sont disposés des commutateurs à bouton-poussoir (50) qui sont connectés à des organes de commande prévus dans les conduites qui mènent aux cylindres à fluide sous pression (27, 31, 32).

12. Dispositif selon une des revendications 8 à 11,
caractérisé
en ce que le levier de commande (45) est agencé mobile en pivotement autour d'un axe vertical, mobile en rotation autour de son axe longitudinal (48) et mobile dans le sens de la longueur au moyen d'une poignée (49).

13. Dispositif selon une des revendications précédentes,
caractérisé
en ce que les deux corps de guidage (25, 26) des bras télescopiques (28, 29) sont guidés sur une colonne cylindrique (23) de manière à pouvoir pivoter autour de l'axe longitudinal (24) de cette colonne, et peuvent être déplacés individuellement en hauteur, chacun au moyen d'un entraînement linéaire (27).

14. Dispositif selon une des revendications précédentes,
caractérisé
en ce que la colonne de guidage (23 ; 109) est agencée dans un support creux fixé latéralement derrière le pied (3 ; 108) de la machine de telle manière que son axe longitudinal (24 ; 109) s'étende à peu près parallèlement à l'axe longitudinal oblique (9 ; 107) du socle de pose (2 ; 104).

15. Dispositif selon une des revendications 1 à 14,
caractérisé
en ce que le galet presseur (43, 44) présente la forme d'un disque conique possédant une surface frontale bombée vers l'avant, et est monté sur une monture (41) située à l'extrémité libre de chaque partie intérieure extensible (39, 40) de manière à pouvoir pivoter d'un angle limité autour d'un axe transversal, à l'encontre de la force d'un ressort.

16. Dispositif selon les revendications 1 à 14,
caractérisé
en ce que les galets presseurs à paroi frontale bombée vers l'avant et à face arrière conique sont fixés à une plaque oblique (80 ; 123) qui est elle-même fixée à l'extrémité du bras porteur (81) correspondant.

17. Dispositif selon les revendications 1 à 16,
caractérisé
en ce que le dispositif de dégagement présente un bras coudé (60, 61, 62) en trois parties à articulations multiples, sur la partie d'extrémité (62) duquel un double bras (64) muni d'un élément de dégagement (67, 68) à chacune de ses extrémités est monté pour pouvoir tourner de 180°, et pour pouvoir être vérrouillé dans ses positions extrêmes.

18. Dispositif selon une des revendications 1 à 17,
caractérisé
en ce que, dans le socle de pose (2), est agencé mobile en translation un plateau tournant (12) chargé par ressort qui peut coulisser selon l'axe du socle.

19. Dispositif selon la revendication 18,
caractérisé
en ce qu'un tenon de sécurité (15) peut être engagé dans l'intérieur de l'axe cylindrique creux du socle.

20. Dispositif selon une des revendications 1 à 13,
caractérisé
en ce que les entraînements linéaires sont réalisés sous la forme de vérins combinés pneumatiques et hydrauliques.
